# EUROPÄISCHE PATENTSCHRIFT

(11) **EP 3 785 930 B1**
(45) Veröffentlichungstag und Bekanntmachung des Hinweises auf die Patenterteilung: **14.02.2024**
(21) Anmeldenummer: 20187097.9
(22) Anmeldetag: 22.07.2020
(51) Int. Cl.: B60C 1/00, C08K 3/36, C08L 9/06

(54) **KAUTSCHUKMISCHUNG FÜR ZWEIRADREIFENLAUFSTREIFEN**
RUBBER COMPOSITION FOR BICYCLE TYRE TREADS
MÉLANGE DE CAOUTCHOUC POUR BANDES DE ROULEMENT DE PNEUS DE DEUX-ROUES

(30) Priorität: 30.08.2019 DE 102019213148
(43) Veröffentlichungstag der Anmeldung: 03.03.2021
(73) Patentinhaber: Continental Reifen Deutschland GmbH, 30165 Hannover (DE)
(72) Erfinder: Herzog, Katharina - c/o Continental AG, 30419 Hannover (DE); Recker, Carla - c/o Continental AG, 30419 Hannover (DE); Kahner, Rainer - c/o Continental AG, 30419 Hannover (DE)
(74) Vertreter: Continental Corporation

(56) Entgegenhaltungen:
- EP-A1- 2 850 110
- US-A1- 2018 265 601
- Janis Eitner: "LKW-Reifen mit weniger Abrieb Synthesekautschuk übertrifft Naturkautschuk", , 1. April 2019 (2019-04-01), Seiten 1-3, XP055752396, Gefunden im Internet: URL:https://www.fraunhofer.de/content/dam/ zv/de/presse-medien/2019/April/ForschungKo mpakt/iap-synthesekautschuk-%C3%BCbertriff t-naturkautschuk.pdf [gefunden am 2020-11-19]
- VAN BEILEN JAN B ET AL: "Guayule and Russian dandelion as alternative sources of natural rubber", CRITICAL REVIEWS IN BIOTECHNOLOGY, CRC PRESS, BOCA RATON, FL, US, Bd. 27, Nr. 4, 1. Oktober 2007 (2007-10-01), Seiten 217-231, XP002764198, ISSN: 0738-8551

## Beschreibung

Die Erfindung einen Zweiradreifen, dessen Laufstreifen aus einer mit Schwefel vernetzten Kautschukmischung besteht.

Für die Herstellung von Zweiradreifen werden unterschiedlichste Kautschukmischungen eingesetzt, wobei die Fahreigenschaften des Reifens in einem großen Umfang von der Kautschukzusammensetzung des Laufstreifens abhängig sind. So soll der Reifen einen geringen Abrieb und einen geringen Rollwiderstand sowie eine sehr gute Haftung auf nassem und trockenem Untergrund aufweisen. Die Eigenschaften Rollwiderstand und Nassgriff verhalten sich dabei in Mischungen oft gegensätzlich. Eine Verbesserung der einen Eigenschaft zieht oftmals eine Verschlechterung der anderen Eigenschaften nach sich.

Aus der DE 196 53 371 C2 sind Fahrradreifen mit hellen, d. h. nicht schwarzen, Laufstreifen bekannt, die einen geringen Abrieb, eine gute Haftung auf nasser und trockener Fahrbahn und gleichzeitig eine hervorragende Alterungsbeständigkeit aufweisen sollen. Der Laufstreifen besteht dabei aus einer einzigen Mischung, die 20 bis 50 phr lösungspolymerisiertes Styrol-Butadien-Copolymer, 20 bis 40 phr Ethylen-Propylen-Dienkautschuk und/oder Butylen-Styrol-Copolymer, 10 bis 60 phr Naturkautschuk, 30 bis 70 phr Kieselsäure und 1,9 bis 4,4 phr Aktivierungsmittel sowie weitere übliche Füll- und Zusatzstoffe enthält.

In der EP 1 419 904 B 1 sind Fahrradreifen bekannt, die auf der Außenseite des Laufstreifens eine zusätzliche rissbeständige Schicht aus einer speziellen Kautschukmischung aufweisen. Für den Laufstreifen wird eine Mischung offenbart, die 80 phr Naturkautschuk, 20 phr Polybutadien, 65 phr Füllstoffe und weitere übliche Zusatzstoffe enthält.

Kommt bei Laufstreifen von Zweiradreifen Naturkautschuk zum Einsatz, handelt es sich üblicherweise um solchen aus Kautschukbäumen (Hevea brasiliensis).

Die EP 2 850 110 A1 und die US 2018/265560 A1 beschreiben Kautschukmischungen für Fahrzeugreifen, die Kautschuk auf Basis von Nicht-Hevea-Pflanzen enthalten.

In der Online-Pressemitteilung von Janis Eitner: "LKW-Reifen mit weniger Abrieb Synthesekautschuk übertrifft Naturkautschuk unter URL:https://www.fraunhofer.de/content/dam/zv/de/pressemedien/2019/April/ForschungKompakt/iap-svnthesekautschuk-%C3%BCbetrifft-naturkautschuk.pdf wird ein spezieller synthetischer Kautschuk (BISYKA-Kautschuk) offenbart, der in den Eigenschaften von Löwenkautschuk z. T. nachgeahmt wurde.

Der vorliegenden Erfindung liegt nun die Aufgabe zugrunde, eine Kautschukmischung bereitzustellen, die eine Verbesserung im Zielkonflikt aus Rollwiderstand und Nassbremsverhalten bei Verwendung als Laufstreifen von Zweiradreifen bewirkt.

Gelöst wird diese Aufgabe dadurch, dass die Kautschukmischung des Laufstreifens des Zweiradreifens wenigstens folgende Bestandteile enthält:
- 10 bis 100 phr natürliches Polyisopren aus Löwenzahn und
- 30 bis 70 phr Kieselsäure.

Überraschenderweise hat sich herausgestellt, dass durch die spezielle Kombination von natürlichem Polyisopren aus Löwenzahn mit 30 bis 70 phr Kieselsäure das Verhältnis von Rollwiderstand und Nassbremsverhalten bei Verwendung als Laufstreifen eines Zweiradreifens deutlich verbessert werden kann. Dabei ist es von Wichtigkeit, dass das natürliche Polyisopren aus Löwenzahn gewonnen wurde. Natürliches Polyisopren aus anderen Quellen, beispielsweise aus Kautschukbäumen wie Hevea brasiliensis, entschärft den Zielkonflikt aus Rollwiderstand und Nassbremsverhalten nicht in dieser Weise.

Die in dieser Schrift verwendete Angabe phr (parts per hundred parts of rubber by weight) ist dabei die in der Kautschukindustrie übliche Mengenangabe für Mischungsrezepturen.

Die Dosierung der Gewichtsteile der einzelnen Substanzen wird in dieser Schrift auf 100 Gewichtsteile der gesamten Masse aller in der Mischung vorhandenen festen Kautschuke bezogen.

Die Kautschukmischung enthält 10 bis 100 phr natürliches Polyisopren (NR) aus Löwenzahn. Polyisopren aus Löwenzahn wird dabei in der Regel aus der Wurzel von Löwenzahnpflanzen gewonnen. Die Extraktion des Kautschuks aus den Wurzeln von Löwenzahn ist beispielsweise in der WO 2018/036825 A1 beschrieben. Es können unterschiedliche Löwenzahnarten zum Einsatz kommen.

Besonders vorteilhaft in Bezug auf die Wirtschaftlichkeit ist es, wenn das natürliche Polyisopren aus der Löwenzahnart Taraxacum koksaghyz gewonnen ist. Dieser Löwenzahntyp lässt sich auch in kälteren Regionen mit hohem Ertrag anbauen und das Polyisopren lässt sich gut aus den Wurzeln extrahieren.

Die Kautschukmischung kann neben dem natürlichen Polyisopren noch bis zu 90 phr weiterer Dienkautschuke enthalten. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei den weiteren Dienkautschuken kann es sich z. B. um natürliches Polyisopren aus anderen Kautschukquellen als Löwenzahn und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk handeln. Die Kautschuke können als reine Kautschuke oder in ölverstreckter Form eingesetzt werden.

Gemäß einer bevorzugten Ausführungsform der Erfindung ist der weitere Dienkautschuk ausgewählt aus der Gruppe bestehend aus synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR) und Ethylen-Propylen-Dien-Kautschuk (EPDM). Eine derartige Kautschukmischung ist insbesondere für den Laufstreifen von Zweiradreifen geeignet. Die Kautschuke können im Verschnitt eingesetzt werden.

Um den Abrieb beim Einsatz der Kautschukmischung als Laufstreifen von Zweiradreifen und damit die Haltbarkeit weiter zu verbessern, hat es sich als vorteilhaft erwiesen, wenn die Kautschukmischung
- 10 bis 40 phr natürliches Polyisopren aus Löwenzahn,
- 10 bis 40 phr Butadien-Kautschuk (BR) und
- 20 bis 80 phr Styrol-Butadien-Kautschuk (SBR) enthält.

Bei dem Butadien-Kautschuk (BR, Polybutadien) kann es sich um alle dem Fachmann bekannten Typen mit einem M_{w} von 250000 bis 500000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Das eingesetzte Polybutadien kann mit Modifizierungen und Funktionalisierungen versehen sein. Vorzugsweise wird ein als Butadien-Kautschuk (BR) ein Polybutadien mit einem cis-Anteil größer oder gleich 90 Gew.-% eingesetzt. Mit einem derartigen high-cis BR werden besonders gute Abriebeigenschaften sowie eine niedrige Hysterese der Kautschukmischung erzielt.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem M_{w} von 250000 bis 600000 g/mol (zweihundertfünfzigtausend bis sechshunderttausend Gramm pro Mol). Das oder die eingesetzte(n) Styrol-Butadien-Copolymere kann/können mit Modifizierungen und Funktionalisierungen versehen sein.

Gemäß einer bevorzugten Weiterbildung der Erfindung ist der Styrol-Butadien-Kautschuk (SBR) ein lösungspolymerisierter Styrol-Butadien-Kautschuk (SSBR). Mit diesem Kautschuktyp werden besonders gute Ergebnisse im Rollwiderstand und Nassgriff erzielt.

Die Kautschukmischung enthält 30 bis 70 phr Kieselsäure. Dabei können alle dem Fachmann bekannten Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Die Kautschukmischung kann weitere Füllstoffe, wie Ruße, Alumosilicate, Kreide, Stärke, Magnesiumoxid, Titandioxid, Kohlenstoffnanoröhrchen, Graphit, Graphene, "carbon-silica dual-phase filler" oder Kautschukgele enthalten, wobei die Füllstoffe in Kombination eingesetzt werden können.

Zur Verbesserung der Verarbeitbarkeit und zur Anbindung der Kieselsäure und anderer ggf. vorhandener polarer Füllstoffe an den Kautschuk können Silan-Kupplungsagenzien in den Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2 bis 8).

So können als Silan-Kupplungsagenzien z. B. 3-Mercaptopropyltriethoxysilan, 3-Thiocyanato-propyltrimethoxysilan oder 3,3 `-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden. Vorzugsweise wird als Silan-Kupplungsagens 3,3'-Bis(triethoxysilylpropyl)tetrasulfid (TESPT) eingesetzt.

In der Kautschukmischung können außerdem Weichmacher in Mengen von 1 bis 300 phr, bevorzugt von 5 bis 150 phr, besonders bevorzugt von 15 bis 90 phr, enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Flüssig-Polymere, wie flüssiges Polybutadien in nicht modifizierter Form eingesetzt werden. Der oder die Weichmacher werden bei der Herstellung der Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N`-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Kohlenwasserstoffharze, wie ggf. insbesondere Klebharze
e) Mastikationshilfsmittel, wie z. B. 2,2'-Dibenzamidodiphenyldisulfid (DBD), und
f) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern, Mercaptobeschleunigem, Sulfenamidbeschleunigem, Thiocarbamatbeschleunigern, Thiurambeschleunigern, Thiophosphatbeschleunigem, Thioharnstoffbeschleunigern, Xanthogenat-Beschleunigern und Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS) und N-tert-Butyl-2-benzothiazylsulfenamid (TBBS), und/oder eines Mercaptobeschleunigers, der ausgewählt ist aus der Gruppe bestehend aus 2-Mercaptobenzothiazol (MBT), Dibenzothiazyldisulfid (MPTS) und Zink-2-mercaptobenzothialzol (ZMBT).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung im Reifen herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung wird für die Herstellung von Laufstreifen von Zweiradreifen, wie Motorrad-, Roller- oder Fahrradreifen, verwendet, wobei die Kautschukmischung zumindest den mit der Fahrbahn in Berührung kommenden Teil des Laufstreifens bildet. Die erfindungsgemäßen Zweiradreifen können nach dem Fachmann bekannten Verfahren hergestellt werden. Die Zweiradreifen weisen einen guten Rollwiderstand bei gleichzeitig gutem Nassbremsverhalten auf.

Gemäß einer bevorzugten Weiterbildung der Erfindung handelt es sich bei dem Zweiradreifen um einen Fahrradreifen, der sich durch einen niedrigen Rollwiderstand bei gutem Nassbremsverhalten und guter Rissbeständigkeit auszeichnet.

Die Erfindung soll nun anhand von Vergleichs- und Ausführungsbeispielen, die in der Tabelle 1 zusammengefasst sind, näher erläutert werden. Vergleichsmischungen sind mit V, erfindungsgemäße Mischungen sind mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Aus sämtlichen Mischungen wurden Prüfkörper durch 14-minütige Vulkanisation unter Druck bei 160 °C hergestellt und mit diesen Prüfkörpern folgende Verlustfaktoren aus dynamisch-mechanischer Messung gemäß DIN 53 513, Temperaturdurchlauf ("Temperature sweep"), Kraftkonstant (50/30 N) ermittelt:
- Verlustfaktor tan δ bei 0 °C als Indikator für das Nassbremsverhalten (größerer Wert korreliert mit einem besseren Nassbremsen beim Reifen)
- Verlustfaktor tan δ bei 60 °C als Indikator für den Rollwiderstand (kleinerer Wert korreliert mit einem niedrigeren Rollwiderstand beim Reifen)

Ferner wurde der Abrieb gemäß DIN 53516 bei Raumtemperatur gemessen.

**Tabelle 1**

| **Bestandteile** | **Einheit** | **1(V)** | **2(E)** | **3(E)** | **4(V)** | **5(E)** | **6(E)** |
|---|---|---|---|---|---|---|---|
| NR aus dem Kautschukbaum (Hevea brasiliensis) | phr | 100 | - | - | 25 | - | - |
| NR aus Löwenzahn (Taraxacum koksaghyz) | phr | - | 100 | 100 | - | 25 | 25 |
| high-cis BR | phr | - | - | - | 25 | 25 | 25 |
| SSBR | phr | - | - | - | 50 | 50 | 50 |
| Kieselsäure^{a} | phr | 55 | 55 | 40 | 55 | 55 | 50 |
| Silan-Kupplungsagens^{b} | phr | 11 | 11 | 8 | 11 | 11 | 10 |
| Weichmacher | phr | 24 | 24 | 24 | 24 | 24 | 24 |
| Alterungsschutzmittel | phr | 4 | 4 | 4 | 4 | 4 | 4 |
| Verarbeitungshilfsmittel | phr | 1 | 1 | 1 | 1 | 1 | 1 |
| Zinkoxid | phr | 3 | 3 | 3 | 3 | 3 | 3 |
| Stearinsäure | phr | 1,5 | 1,5 | 1,5 | 1,5 | 1,5 | 1,5 |
| Beschleuniger | phr | 2,8 | 2,8 | 3,0 | 2,8 | 2,8 | 2,8 |
| Schwefel | phr | 1,2 | 1,2 | 1,4 | 1,2 | 1,2 | 1,2 |

| **Eigenschaften** | | | | | | | |
|---|---|---|---|---|---|---|---|
| tan δ bei 0 °C | - | 0,293 | 0,507 | 0,391 | 0,397 | 0,454 | 0,425 |
| tan δ bei 60 °C | - | 0,097 | 0,170 | 0,093 | 0,115 | 0,133 | 0,113 |
| Δ (tan δ 0 °C - tan δ 60 °C) | - | 0,196 | 0,337 | 0,298 | 0,282 | 0,321 | 0,313 |
| Abrieb bei RT | mm³ | 192 | 245 | 251 | 78 | 86 | 89 |

| | | | | | | | |
|---|---|---|---|---|---|---|---|
| ^{a} hoch dispergierbare Kieselsäure mit einer CTAB-Oberfläche (gemäß ASTM D 3765) von 160 m²/g ^{b} 3,3 `-Bis(triethoxysilylpropyl)tetrasulfid (TESPT), 50 Gew.-% auf Ruß | | | | | | | |

Der Tabelle 1 kann man entnehmen, dass die spezielle Kombination von 10 bis 100 phr natürlichem Polyisopren aus Löwenzahn mit 30 bis 70 phr Kieselsäure im Vergleich zu einer entsprechenden Kombination mit natürlichem Polyisopren aus Kautschukbäumen zu einer deutlichen Verbesserung des Zielkonflikte aus Nassbremsverhalten und Rollwiderstand führt. Die Differenz aus den tan δ-Werten bei 0 °C und 60 °C wird größer. Selbst wenn man den tan δ-Wert bei 60 °C als Maß für den Rollwiderstand durch Reduzierung der Kieselsäuremenge und/oder die Erhöhung der Vernetzermenge reduziert (s. Mischungen 3(E) und 6(E)), erzielt man trotzdem ein verbessertes Nassbremsverhalten (tan δ-Wert bei 0 °C hoch).

Setzt man das natürliche Polyisopren aus Löwenzahn gemäß den Mischung 5(E) und 6(E) in Kombination mit high-cis Polybutadien und lösungspolymerisiertem Styrol-Butadien-Kautschuk ein, so kann man zusätzlich eine deutliche Verbesserung im Abriebverhalten und damit eine höhere Reifenhaltbarkeit erzielen.

## Patentansprüche

1. Zweiradreifen, dessen Laufstreifen aus einer mit Schwefel vernetzten Kautschukmischung besteht, die wenigstens folgende Bestandteile enthält:
- 10 bis 100 phr natürliches Polyisopren aus Löwenzahn und
- 30 bis 70 phr Kieselsäure.

2. Zweiradreifen nach Anspruch 1, **dadurch gekennzeichnet, dass** das natürliche Polyisopren aus Löwenzahnart Taraxacum koksaghyz gewonnen ist.

3. Zweiradreifen nach Anspruch 1 oder 2, **dadurch gekennzeichnet, dass** die Kautschukmischung
- 10 bis 40 phr natürliches Polyisopren aus Löwenzahn,
- 10 bis 40 phr Butadien-Kautschuk (BR) und
- 20 bis 80 phr Styrol-Butadien-Kautschuk (SBR) enthält.

4. Zweiradreifen nach Anspruch 3, **dadurch gekennzeichnet, dass** der Butadien-Kautschuk (BR) ein Polybutadien mit einem cis-Anteil größer oder gleich 90 Gew.-% ist.

5. Zweiradreifen nach zumindest einem der vorhergehenden Ansprüche 3 oder 4, **dadurch gekennzeichnet, dass** der Styrol-Butadien-Kautschuk (SBR) ein lösungspolymerisierter Styrol-Butadien-Kautschuk (SSBR) ist.

6. Zweiradreifen nach zumindest einem der vorhergehenden Ansprüche, **dadurch gekennzeichnet, dass** die Kieselsäure eine hoch dispergierbare Kieselsäure mit einer CTAB-Oberfläche (gemäß ASTM D 3765) von 110 bis 250 m²/g ist.

7. Zweiradreifen nach zumindest einem der vorhergehenden Ansprüche, **dadurch gekennzeichnet, dass** die Kautschukmischung wenigstens ein Silan-Kupplungsagens enthält.

8. Zweiradreifen nach Anspruch 7, **dadurch gekennzeichnet, dass** das Silan-Kupplungsagens 3,3 `-Bis(triethoxysilylpropyl)tetrasulfid ist.

9. Zweiradreifen nach zumindest einem der vorhergehenden Ansprüche, **dadurch gekennzeichnet, dass** es ein Fahrradreifen ist.

## Claims

1. Two-wheeler tyre whose tread is composed of a sulfur-crosslinked rubber mixture containing at least the following constituents:
- 10 to 100 phr of natural polyisoprene from dandelion and
- 30 to 70 phr of silica.

2. Two-wheeler tyre according to Claim 1, **characterized in that** the natural polyisoprene is obtained from the dandelion species Taraxacum koksaghyz.

3. Two-wheeler tyre according to Claim 1 or 2, **characterized in that** the rubber mixture contains
- 10 to 40 phr of natural polyisoprene from dandelion,
- 10 to 40 phr of butadiene rubber (BR) and
- 20 to 80 phr of styrene-butadiene rubber (SBR).

4. Two-wheeler tyre according to Claim 3, **characterized in that** the butadiene rubber (BR) is a polybutadiene having a cis-proportion of not less than 90% by weight.

5. Two-wheeler tyre according to at least one of the preceding Claims 3 or 4, **characterized in that** the styrene-butadiene rubber (SBR) is a solution-polymerized styrene-butadiene rubber (SSBR).

6. Two-wheeler tyre according to at least one of the preceding claims, **characterized in that** the silica is a highly dispersible silica having a CTAB surface area (according to ASTM D3765) of 110 to 250 m²/g.

7. Two-wheeler tyre according to at least one of the preceding claims, **characterized in that** the rubber mixture contains at least one silane coupling agent.

8. Two-wheeler tyre according to Claim 7, **characterized in that** the silane coupling agent is 3,3'-bis(triethoxysilylpropyl)tetrasulfide.

9. Two-wheeler tyre according to at least one of the preceding claims, **characterized in that** it is a bicycle tyre.

## Revendications

1. Pneu de deux-roues, dont la bande de roulement est constituée d'un mélange de caoutchouc réticulé au soufre, qui contient au moins les constituants suivants :
- 10 à 100 phr d'un polyisoprène naturel provenant du pissenlit et
- 30 à 70 phr de silice.

2. Pneu de deux-roues selon la revendication 1, **caractérisé en ce que** le polyisoprène naturel est obtenu à partir de l'espèce de pissenlit Taraxacum koksaghyz.

3. Pneu de deux-roues selon la revendication 1 ou 2, **caractérisé en ce que** le mélange de caoutchouc contient
- 10 à 40 phr d'un polyisoprène naturel de pissenlit,
- 10 à 40 phr de caoutchouc butadiène (BR) et
- 20 à 80 phr de caoutchouc styrène-butadiène (SBR).

4. Pneu de deux-roues selon la revendication 3, **caractérisé en ce que** le caoutchouc butadiène (BR) est un polybutadiène ayant une teneur en cis supérieure ou égale à 90 % en poids.

5. Pneu de deux-roues selon au moins l'une des revendications précédentes 3 ou 4, **caractérisé en ce que** le caoutchouc styrène-butadiène (SBR) est un caoutchouc styrène-butadiène polymérisé en solution (SSBR).

6. Pneu de deux-roues selon au moins l'une des revendications précédentes, **caractérisé en ce que** la silice est une silice hautement dispersible ayant une aire CTAB (selon ASTM D 3765) de 110 à 250 m²/g.

7. Pneu de deux-roues selon au moins l'une des revendications précédentes, **caractérisé en ce que** le mélange de caoutchouc contient au moins un agent de couplage de type silane.

8. Pneu de deux-roues selon la revendication 7, **caractérisé en ce que** l'agent de couplage de type silane est le tétrasulfure de 3,3'-bis(triéthoxysilylpropyle).

9. Pneu de deux-roues selon au moins l'une des revendications précédentes, **caractérisé en ce qu'**il s'agit d'un pneu de vélo.
